# EUROPEAN PATENT APPLICATION

(11) **EP 2 315 326 A1**
(43) Date of publication of application: **27.04.2011**
(21) Application number: 09173777.5
(22) Date of filing: 22.10.2009
(51) Int. Cl.: H02B 13/045

(54) **Gas insulated conductor assembly and method of assembling a housing of a gas insulated conductor assembly**

(71) Applicant: ABB Technology AG, 8050 Zürich (CH)
(72) Inventor: Sologuren-Sanchez, Diego, CH-5430, Wettingen (CH); Keller, Markus, CH-8057, Zürich (CH)
(74) Representative: ABB Patent Attorneys

(57) **Abstract**

Gas insulated conductor assembly comprising a housing for delimiting an insulating gas, the housing has a first housing section (102) and a second housing section (104) fitted with a first flange (106) and a second flange (108) respectively. Clamping surfaces of each flange are pressed towards one another by a clamp device (112). The clamp device (112) has at least one clamp member (114, 116), wherein the at least one clamp member has a first jaw surface and a second jaw surface. The first jaw surface cooperates with the clamping surface of the first flange and the second jaw surface cooperates with the clamping surface of the second flange. At least one of the first clamping surface, the second clamping surface, the first jaw surface and the second jaw surface has an oblique surface portion with respect to a radial plane such that the first flange and the second flange are pressed towards each other.

## Description

The present disclosure relates to a gas insulated conductor assembly comprising a housing for holding an insulated gas therein. Further, the present disclosure relates to a method for assembling a housing of a gas insulated conductor assembly, the housing comprising a first housing section and a second housing section.

Typically, housing sections of a gas insulated conductor system are connected with a plurality of bolts or screws. For example, EP 1 058 363 B1 discloses a releasable flange connection for external conductors of a gas insulated conductor system wherein two connecting flanges are welded onto the ends of two external conductor portions which can be connected by screws.

Thus, for a replacement of a portion of the gas insulated conductor, all screws must be loosened, and tightened again. Further, the screws have to be tightened one after another, such that a first portion of the gas insulated conductor may be eccentrically arranged from the second portion of the gas insulated conductor.

Further, gas insulated switch gears are built from several units, wherein each unit has its own encapsulation and which is connected with other units about a flange. The connection of the flange has to assure a gas impermeability and a current conduction. Thus, the flanges are typically pressed onto each other with an adequate force. This force is applied with several screw connections which are distributed around the circumference of the flange. The screw connection may be a screw nut connection in an embodiment, in other embodiments the screw may cooperate with a thread in the respective cooperating flange or a bolt with two nuts. The screw and the bolts are provided in respective bores in the flange and then they are fixed. Hence, enough space has to be provided around the gas insulated conductor, such that a technician may fix the screws or bolts on all sides of the gas insulated conductor.

Object is to provide a gas insulated conductor assembly that does not present the drawbacks of the prior gas insulated conductor assemblies, in particular which is easily to mount. According to a first aspect, a gas insulated conductor assembly comprising a housing for holding an insulating gas therein is provided, the housing having a first housing section and a second housing section, wherein the first housing section has a first flange arranged at an end thereof, and the second housing section has a second flange arranged at an end thereof, each of the first flange and the second flange having a respective contact surface and a respective clamping surface opposite to the contact surface, wherein the contact surfaces of the first flange and of the second flange are facing each other, the end of the first housing section defining a first housing axis and the end of the second housing section defining a second housing axis and the ends of the first and second housing section defining a radial plane perpendicular to the housing axis, the gas insulated conductor assembly further comprising a clamp device clamping the first flange and the second flange against each other and having at least one clamp member, wherein the at least one clamp member has a first jaw surface and a second jaw surface, wherein the first jaw surface cooperates with the clamping surface of the first flange and the second jaw surface cooperates with the clamping surface of the second flange, wherein at least one of the first clamping surface, the second clamping surface, the first jaw surface and the second jaw surface has an oblique surface portion with respect to the radial plane such that the first flange and the second flange are pressed towards each other.

Using one or more clamp members, which are slid over the pair of flanges of the first housing section and the second housing section, and are subsequently stressed in radial direction onto the flange, in particular by a circumferential force. Thus, the diameter of the clamp device or the radial distance to the longitudinal or housing axis is reduced. Typically, in case of a plurality of clamp members, these are interconnected with each other in a circumferential direction of the flanges to be connected. Thus, a clamping effect between the oblique surfaces of the clamp member and the flange is used, such that the flanges are jammed one onto the other. In typical embodiments, the clamp members may be connected directly with the housings of the gas insulated conductor assembly. In some embodiments, which may be combined with other embodiments disclosed herein, the clamp members may be tensed with respect to each other, for example in circumferential direction. In a typical embodiment, the first clamping surface, the second clamping surface, the first jaw surface and/or the second jaw surface are oblique at a supporting point of the respective cooperating jaw or clamping surface. In an embodiment, the housing axis is a normal to the opening surface formed by the first and second flanges or the ends of the first and second housing sections.

In a typical embodiment, the end of the first housing section is centred with respect to the end of the second housing by a clamp device, such that the first housing axis is aligned to the second housing axis.

In a further embodiment, the first housing axis has an offset to the second housing axis.

For example, in an embodiment, the first jaw surface is opposite the second jaw surface in axial direction.

In an embodiment, which may be combined with other embodiments disclosed herein, the gas insulated conductor assembly includes at least one internal conductor arranged inside the first and/or the second housing sections, wherein in particular the at least one internal conductor is one, two or three internal conductors, and wherein in particular at least a portion of the at least one internal conductor extends parallel to the respective housing axis. In a further embodiment, a housing section, for example the first and/or the second housing section may be provided without a internal conductor. For example, a pressure sensor including a first housing section may be connected to a second housing section.

In a further embodiment, the clamp device is arranged as a ring around the housing in a circumferential direction, and wherein the clamp device includes an opening element for opening the ring.

For example, in an embodiment, the clamp device may include a tensioning mechanism for tensioning the clamp device in a circumferential direction.

In a typical embodiment, the tensioning mechanism is a bolt and nut system, having a bolt-and-nut axis in a circumferential direction.

In another embodiment, the tensioning mechanism may include a buckle. In an embodiment, the buckle may be formed similar to a ski boot buckle.

In an embodiment, which may be combined with other embodiments disclosed herein, the clamp device includes a plurality of clamp members.

In an embodiment, which may be combined with other embodiments disclosed herein, the clamp members are arranged in a chain with neighbouring clamp members being interconnected by respective hinges.

In a typical embodiment, the hinges have respective hinge axes in parallel to the housing axis.

Typically, the at least one clamp member may be shaped as a circular ring segment.

In a further embodiment, the at least one clamp member of the clamp device is shaped as a substantially straight bar.

In an embodiment, which may be combined with other embodiments disclosed herein, the clamp device further includes a tensioning mechanism for pressing the at least one clamp member against a side of the flange, the tensioning system being in particular a bolt and nut system.

According to a further aspect, a gas insulated switchgear assembly is provided comprising at least one gas insulated conductor assembly according to an embodiment disclosed herein.

According to a further aspect, the present disclosure concerns a method of assembling a housing of a gas insulated conductor assembly, the housing comprising a first housing section and a second housing section, the first housing section having a first flange arranged at an end of the first housing section, and the second housing section having a second flange arranged at an end of the second housing section, each of the first flange and the second flange having a respective contact surface and a respective clamping surface opposite to the contact surface, wherein the contact surfaces of the first flange and of the second flange are facing each other, the method comprising: - placing a clamp device having at least one clamp member circumferentially around the first flange and the second flange, such that a first jaw surface of the at least one clamp member cooperates with the clamping surface of the first flange, and that a second jaw surface of the at least one clamp member facing the first jaw surface cooperates with the clamping surface of the second flange, wherein at least one of the first clamping surface, the second clamping surface, the first jaw surface and the second jaw surface has an oblique surface portion with respect to a radial plane defined by the end of the first housing section and the end of the second housing section; and - tightening the clamp device in a circumferential direction such that the first flange and the second flange are pressed towards each other.

Typically, the end of the first housing section defines a first housing axis and the end of the second housing section defines a second housing axis and the ends of the first and second housing section define a radial plane perpendicular to the housing axis. In an embodiment, the clamp device is tightened in direction of the radial plane, in particular in a circumferential direction.

In an embodiment, which may be combined with other embodiments disclosed herein, the end of the first housing section is centred with respect to the end of the second housing by the clamp device.

In a typical embodiment, the first and/or the second housing section is or are conducting.

In another embodiment, an insulating device may be disposed between the contact surfaces of the first and second gas insulated conductor, wherein in particular the insulating device include a measurement device for a partial discharge.

For example, in an embodiment, the clamp device includes a connector for a measurement of a partial discharge.

In a typical embodiment, the first and the second housing sections define a common gas space.

In an embodiment, which may be combined with other embodiments disclosed herein, the first and/or the second flange has or have a substantial circular form in a cross-sectional view of the end of the housing section.

For example, in an embodiment, the clamp device includes two half circular clamp members.

In an embodiment, which may be combined with other embodiments disclosed herein, the radially extending flange may have a substantial rectangular form in a cross-sectional view of the end of the housing section.

In another embodiment, the first clamping surface and/or the second clamping surface has or have an oblique surface portion with respect to the radial plane for pressing the first flange and the second flange towards each other.

In an embodiment, which may be combined with other embodiments disclosed herein, the first jaw surface and/or the second jaw surface has or have an oblique surface portion with respect to the radial plane.

In a typical embodiment, the first and/or second jaw surface abuts or abut in surface against the respective clamping surface.

Further advantages, features, aspects and details are evident from the dependent claims, the description and the drawings.

Embodiments are also directed to apparatuses or for carrying out the disclosed methods and including apparatus parts for performing described method steps. Further, embodiments are also directed to methods by which the described apparatus operates or by which the described apparatus is manufactured. The method steps may be performed by way of hardware components, firmware, software, a computer programmed by appropriate software, by any combination thereof or in any other manner.

So that the manner in which the above recited features of the present invention can be understood in detail, a more particular description of the invention, briefly summarized above, with reference to the description of some embodiments. The accompanying drawings relating to embodiments of the invention are described in the following:
Fig. 1 shows a schematic drawing of a gas insulated conductor assembly;
Fig. 2 shows a perspective view of a cross section of a gas insulated conductor assembly;
Fig. 3 shows a schematic perspective view of a gas insulated conductor assembly;
Fig. 4 shows a partial perspective view of a section of a gas insulated conductor assembly according to an embodiment;
Figs. 5a and 5b show a cross-sectional perspective view and a perspective view of a further embodiment of a gas insulated conductor assembly;
Fig. 6 shows a schematic sectional view of an embodiment of a gas insulated conductor assembly portion;
Fig. 7 shows a further schematic embodiment of a gas insulated conductor assembly portion;
Fig. 8 shows another schematic portion of a gas insulated conductor assembly;
Fig. 9 shows a cross sectional axial view of a gas insulated conductor assembly;
Fig. 10 shows a further sectional view in an axial direction of an embodiment of a gas insulated conductor assembly;
Fig. 11 shows a perspective view of an embodiment of a clamp member; and
Fig. 12 shows a further embodiment of a clamp device.

Reference will now be made in detail to the various embodiments, one or more example of which are illustrated in the figures. Each example is provided by way of explanation, and is not meant as a limitation of the invention. Within the following description of the drawings, the same reference numbers refer to the same components. Generally, only the differences with respect to the individual embodiments are described.

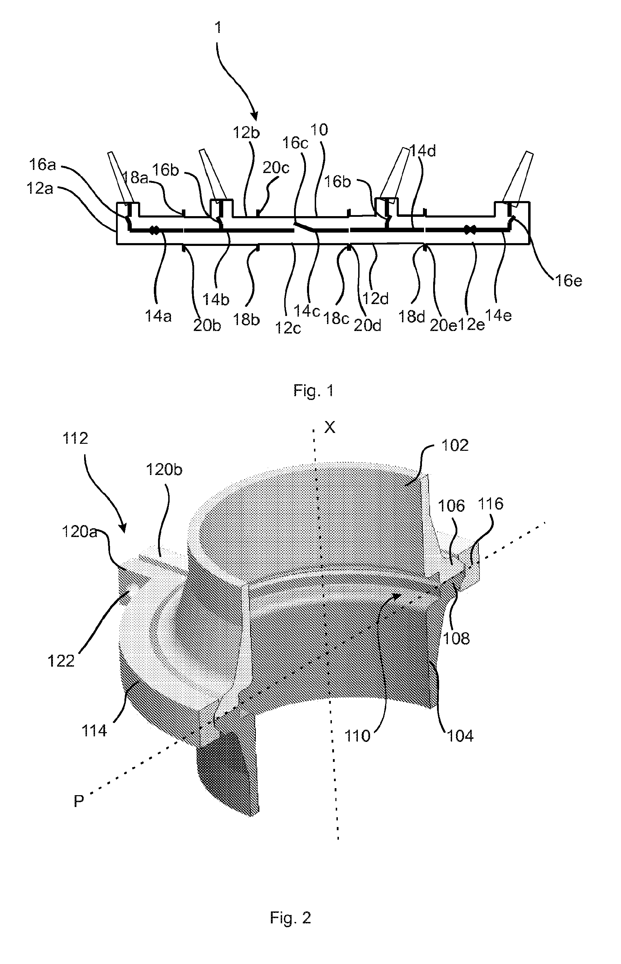

In Fig. 1 a schematic side view of a gas insulated conductor assembly 1 is shown. The gas insulated conductor assembly 1 includes a housing 10 for holding an insulating gas therein, the housing having a plurality of housing sections 12a, 12b, 12c, 12d, and 12e. A nominal conductor or internal conductor or conductor sections 14a, 14b, 14c, 14d, and 14e are provided in the housing sections. The nominal conductor may include one or more switches 16a, 16b, 16c, 16d, 16e. In further embodiments, which may be combined with other embodiments disclosed herein, the internal or nominal conductor may not have any switches. Further, the internal conductor 14a, 14b, 14c, 14d, 14e may be provided in sections or portions connected with each other, having for example a length similar to the respective housing sections 12a, 12b, 12c, 12d, and 12e. Each housing section has at least a first end having a first flange 18a, 18b, 18c, and 18d and a second end with a second flange 20b, 20c, 20d, and 20e. Typically, the first flange is connected to the second flange of an adjacent housing section. Thus, a continuous chamber for an insulating gas may be provided. In other embodiments, the chamber may be divided in subchambers by insulating disks. For example, the disks may be mounted at the ends of the housing sections, for example at the first and second flanges 18a, 18b, 18c, 18d, 20b, 20c, 20d, and 20e. Typically an insulating gas may be provided in the gas space between the nominal conductor and the housing. In an embodiment, the gas may be SF₆.

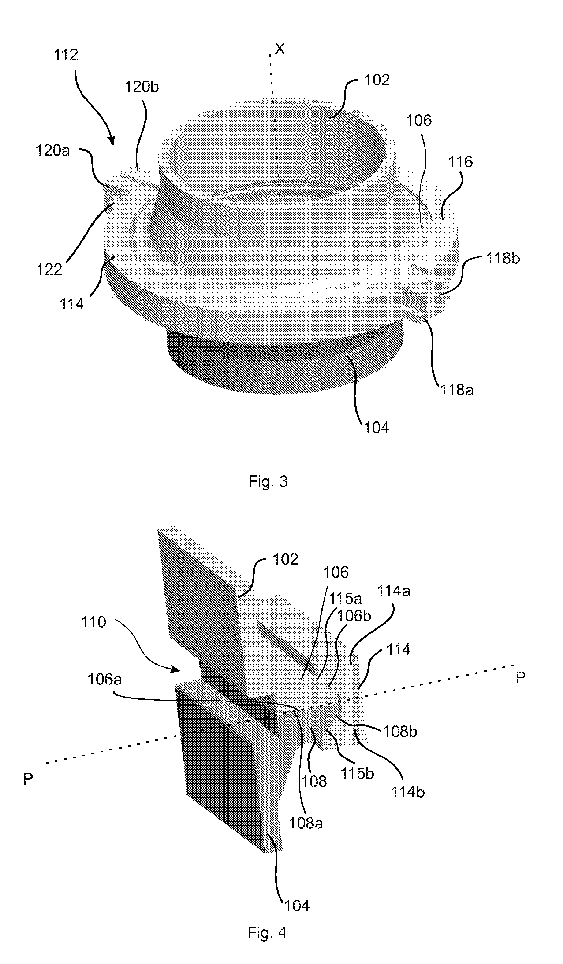

Figs. 2 and 3 show an embodiment of a gas insulated conductor assembly comprising a first housing section 102 and a second housing section 104. The first housing section 102 has a first flange 106 at an end thereof and the second housing section 104 has a second flange 108 at an end thereof. Typically, the ends of the housing sections and/or the first and second flanges 106, 108 define an opening area defining a longitudinal axis or housing axis X normal to that area. The opening area is typically in a radial plane P of the ends of the housing sections. Typically, the longitudinal axis corresponds to the axis of a conductor passing from the first housing section to the second housing section. In an embodiment, a common space 110 for supporting an insulating disk therein is formed on the inner side of the first and second flanges 106, 108, which is limited on one side in an axial direction by the first housing section 102 and on the axially opposite side by the second housing section 104. On the exterior side of the flanges a clamping device or clamp device 112 is provided for clamping the first flange 106 and the second flange 108 against each other. In a typical embodiment, the clamping device 112 includes a first clamping member 114 and a second clamping member 116, each of them substantially forming a half circle around the first and the second flanges 106, 108. In an exemplary embodiment, the first clamp member 114 and the second clamp member 116 have respectively a first end 118a, 118b which form together a hinge or are connected by a hinge. The hinge may have, in an embodiment, a hinge axis parallel to the longitudinal axis. In other embodiments, the hinge axis may have another orientation. Further, the first and second clamp members 114, 116 have respectively a second end 120a, 120b, which may be connected to each other for tensioning the ring formed by the first and second clamp members 114, 116 in a circumferential direction. For example, in an embodiment, each second end 120a, 120b may have an hole 122 in a circumferential direction through which a screw and nut may be disposed.

Fig. 4 shows a further embodiment, which may be combined with other embodiments disclosed herein of a portion of the first housing section 102 connected to the second housing section 104. Further, a portion of the first clamp member 114 is shown in Fig. 4 in contact with the first flange 106 and the second flange 108. Each flange has a contact surface 106a, 108a that are abutting against each other. In a further embodiment, which may be combined with other embodiments herein the contact surfaces 106a, 108a of the first flange 106 and the second flange 108 are facing each other, and an insulating device, for example an O-ring, may be disposed between them. In such an embodiment, an electrical connection between the first housing section 102 and the second housing section 104 may be provided by an electrical wire. For example, the electrical wire may be screwed or welded onto the first and second housing sections 102, 104.

The first flange 106 and the second flange 108 have respectively a clamping surface 106b, 108b opposite to the contact surface 106a, 108b. Each clamping surface 106b, 108b is oblique with respect to a radial plane P of the ends of the first and second housing sections 102, 104. The first clamp member 114 has a first jaw 114a and a second jaw 114b, wherein the first jaw 114a has a first jaw surface 115a and the second jaw 114b has a second jaw surface 115b. The first and the second jaw surfaces 115a, 115b are also inclined with respect to the radial plane P of the ends of the housing sections 102, 104, when mounted on the first and second flanges 106, 108. In a typical embodiment, which may be combined with other embodiments disclosed herein, the inclination of the first jaw surfaces 115a, 115b corresponds to the inclination of the clamping surfaces 106b, 108b. Thus, when the clamp member 114 is pressed in radial direction onto the first and second flanges 106, 108, the first and second flanges 106, 108 are pressed towards each other.

Typically, in case of a round flange in axial direction, the first and the second housing sections are also centred with respect to each other.

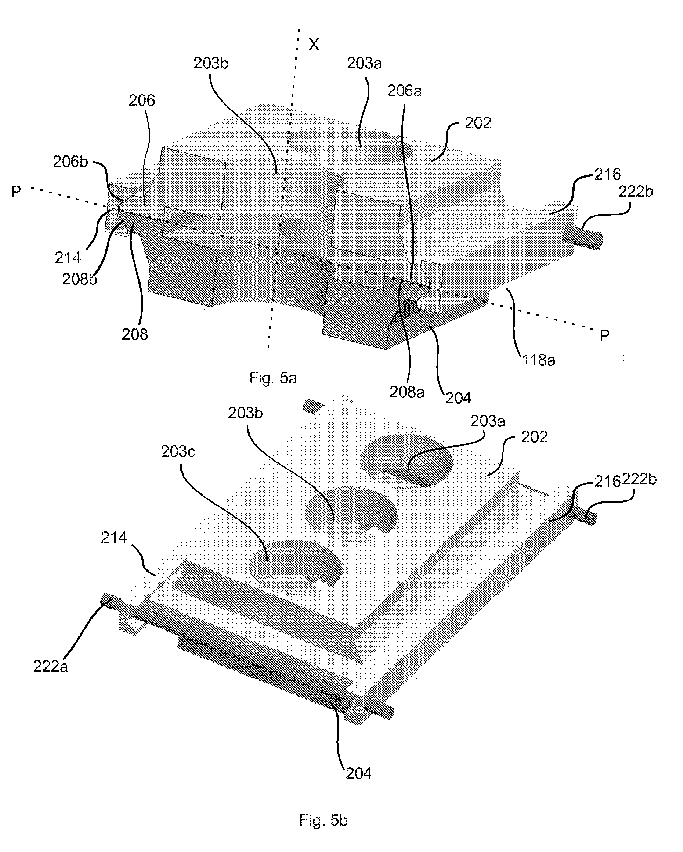

Figs. 5a and 5b show a further embodiment of a gas insulated conductor assembly. The gas insulated conductor assembly includes a first housing section 202 and a second housing section 204. Each housing section may be connected with three tubes (not shown) welded to the first housing section 202 at three openings 203a, 203b and 203c thereof. In a typical embodiment, each tube may include a nominal conductor (not shown). Thus, the tubes are connected gas tight with the first housing section 202. The first housing section 202 has an end having a first flange 206 and the second housing section 204 has an end with a second flange 208, the first flange 206 and the second flange 208 are abutting against each other.
The first and second flanges 206, 208 have a similar form in cross-section to the flanges shown in Figs. 2, 3 and 4. The first flange 206 and the second flange 208 have each a contact surface 206a, 208a abutting on each other, and a respective clamping surface 206b, 208b opposite to the contact surface 208a, 208b. The first and second flanges 206, 208 shown in Figs. 5a, 5b has a substantially rectangular form in the plane P of the ends of the first and second housing sections 202, 204. Further, a clamping device comprising a first clamping member 214 and a second clamping member 216 abutting on opposite flange sides of the substantial rectangular first flange and second flange 206, 208 is disposed therearound. The first clamp member and the second clamp member 214, 216 are tightened against each other with a first bolt 222a and a second bolt 222b, each bolt extending in parallel to a side of the rectangular first flange and rectangular second flange. Thus, also the first bolt 222a and the second bolt 222b are extending in a circumferential direction of the first flange 206 and 208, such that the clamping device 214, 214, 222a, 222b tightens in a circumferential direction of the first flange 206 and the second flange 208.

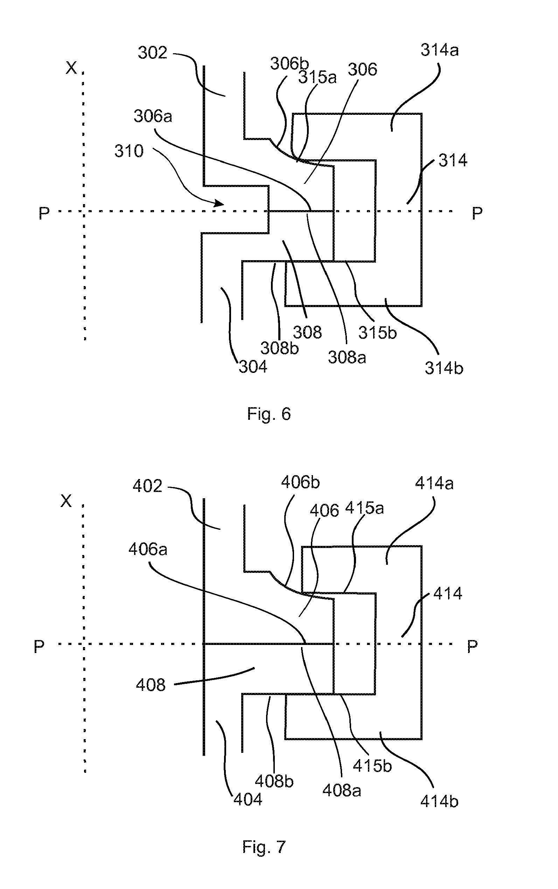

Fig. 6 shows a cross-sectional view in a longitudinal direction of the gas insulated conductor assembly of a portion of an embodiment of the gas insulated conductor assembly. In the following, the reference signs are increased by 200 with respect to the embodiment shown in Figs. 2, 3 and 4 for the same features. A gas insulated conductor assembly includes a first housing section 302 and a second housing section 304. The first housing section 302 includes a first flange 306 and a second housing section includes a second flange 308. On the inner side of the first and second flanges 306, 308 a space is disposed for fixing an insulating disk for dividing the space in the housings into subchambers. Both flanges 306, 308 have a contact surface 306a, 308a, which are abutting against each other, when the first housing section 302 is mounted onto the second housing section 304. Opposite to the contact surfaces 306a, 308a in an axial direction the flanges have a respective clamping surface 306b, 308b. Typically, the longitudinal axis X defining the axial direction is a normal on the opening area formed by the flanges. The opening area lies in a radial plane P of the ends of the first end second housing.

Further, in Fig. 6 a clamp device 314 having a first jaw 314a and a second jaw 314b the first jaw having a first jaw surface 315a, and the second jaw has a second jaw surface 315b. The jaw surfaces 315a, 315b cooperate with the clamping surfaces 306b, 308b to press the second flange and a first flange onto each other, in particular in an axial direction. In Fig. 6 the clamping surface 306b of the first flange 306 is concave. The clamping surface 308b of the second flange 308 is plane, in particular parallel to the radial plane P of the end of the first and second housing sections. The first jaw surface 315a is convex and acts onto the concave clamping surface 306b of the first flange 306. The second jaw surface 315b is substantially plane and substantially parallel to the radial plane P. Thus, the first housing section 302 and the second housing section 304 may be misaligned with respect to each other or may have an offset, and are not centered by the clamp device 314. Nevertheless, an airtight connection may be realized.

Fig. 7 shows a further embodiment of a gas insulated conductor assembly in a partial cross-sectional view in longitudinal direction. The same features are designated with the same reference numbers as in Fig. 6 increased by 100. In contrast to the embodiment shown in Fig. 6 it does not have a common recess of the first and second flanges for holding an insulating disk. In contrast to the embodiment of Fig. 6, the clamp device 414 has a first jaw surface 415a which is substantially parallel to the radial plane P.

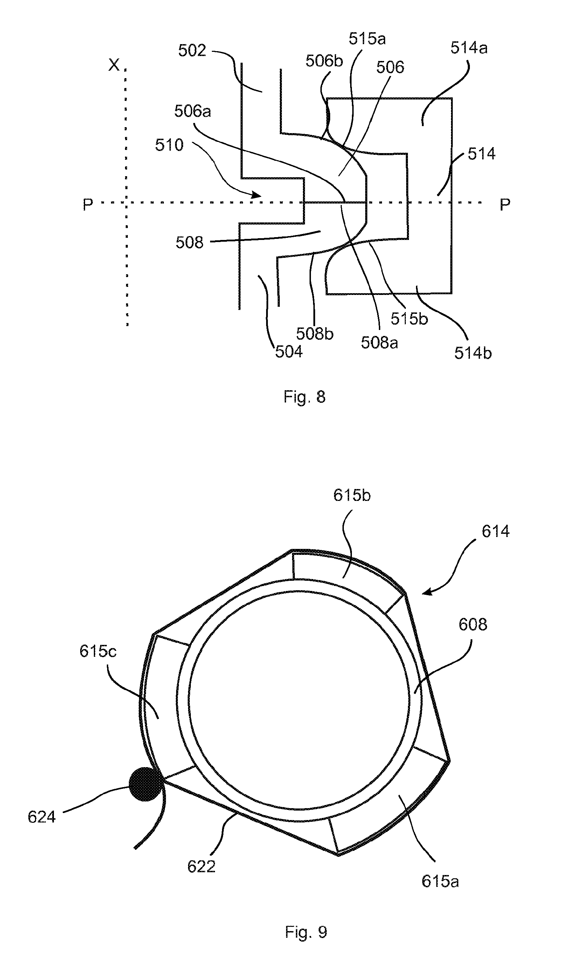

Fig. 8 shows another embodiment of a gas insulated conductor assembly in a cross-sectional view in a longitudinal direction. The same features are designated with the same reference numbers increased by 200 with respect to the embodiment shown in Fig. 6. In the embodiment shown in Fig. 8, the clamping surfaces 506b, 508b of the first and second flanges 506, 508 have a substantially convex shape in cross section. Further, the first and second jaw surfaces 515a, 515b have also a substantially convex surface.

Fig. 9 shows a cross-sectional view, the section being in the radial plane P, of a further embodiment of a gas insulated conductor assembly. In Fig. 9, a first or second flange 608 of a first or second housing section is shown. Further, a clamp device 614 includes three clamp members 615a, 615b, 615c which are abutting against the flange 608. In a typical embodiment, the clamp members may have a cross-section in a longitudinal direction as shown in one of the previous embodiments. In the embodiment shown in Fig. 9, which may be combined with other embodiments disclosed herein, the clamp members 615a, 615b, 615c are surrounded by a screw clamp 620 including a band 622 in which, in an embodiment, a screw thread pattern is formed. Further, the screw clamp 620 includes a screw 624 for tightening the band 622 around the clamp members 615a, 615b, 615c. When the screw 624 is turned, it acts like a worm drive pulling the threads of the band. Thus the clamp device 614 is tightened in a circumferential direction.

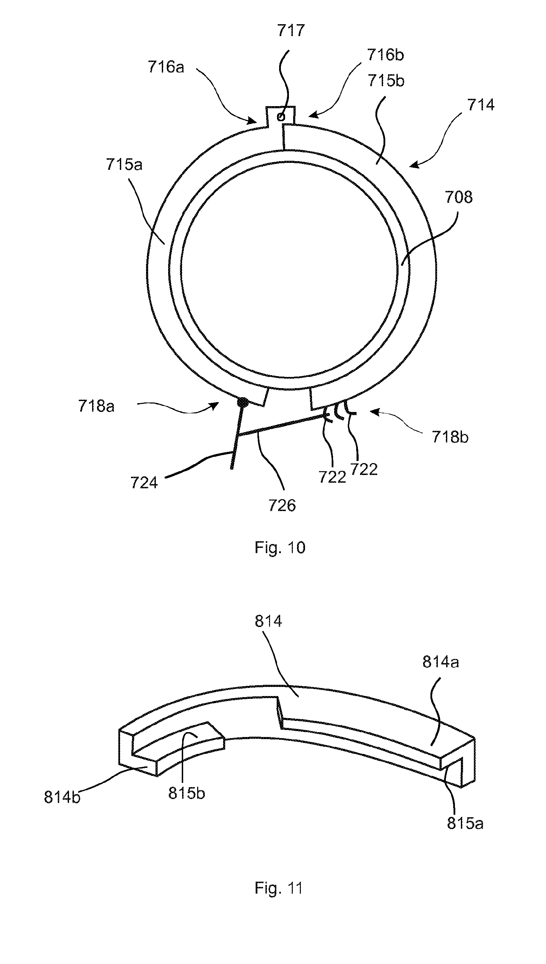

Fig. 10 shows a further embodiment of a gas insulated conductor assembly in a cross-sectional view parallel to the radial plane P. In Fig. 10 the first or second flange 708 of the first or second housing section is shown. Further, a clamp device 714 including a first clamp member 715a and second clamp member 715b each having a first end 716a, 716b where the first clamp member 715a is connected to the second clamp member 715b with a hinge 717 having a hinge section parallel to the axial direction X of the ends of the first and second housing sections. The second ends 718a, 718b of the first and second clamp members 715a, 715b may be connected by a buckle system 720, for tighten the clamp device in circumferential direction of the first and second flanges 708. The buckle includes a one or more hooks 722 at the second end 718b of the second clamp member 715b and a lever 724 fixed at the second end 718a of the first clamp member 715a which further includes an eye 726 to be hooked into one of the hooks 722. With the lever 724, the eye 726 may be pulled into the circumferential direction, such that the clamp members 715a, 715b are tightened against the first and second flanges 708.

Fig. 11 shows an embodiment of a clamp member 814 having a first jaw 814a and second jaw 814b. The first jaw has a first jaw surface 815a and the second jaw has a second jaw surface 815b. The first jaw surface and the second jaw surface 815a, 815b are not facing each other. Nevertheless, the first jaw 814a, and the second jaw 814b are in a fixed relationship to each other, such that a force in a radial direction towards the axis of an end of the first and second housing sections may force the flanges of the first and second housing sections towards each other.

In a typical embodiment in case of circular flanges two halve circular clamp members may be used to be disposed around a pair of flanges. For example, both flange members may be connected at a connection point with a hinge. Both other ends are for example connected and tightened with the screw or the like. The screw is then disposed, such that it can be easily mounted by a technician. This principle may be also applied for non round flanges, if the form of the clamp members is adapted to the non round flanges.

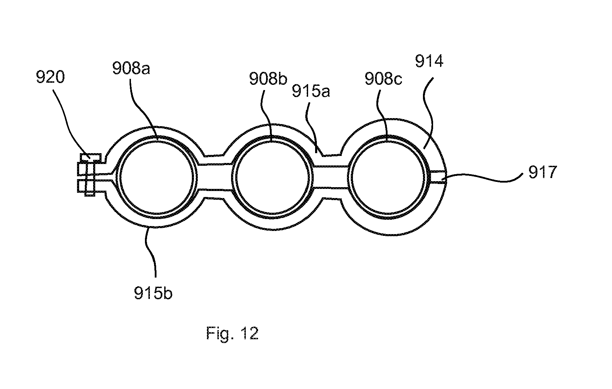

In other embodiments, which may be combined with other embodiments disclosed herein, several parallel flange connections, for example in the case of a three phase system, may be clamped with only one single clamp device. Such a device is shown in Fig. 12 showing a cross-sectional view in the radial plane of the ends of the housing sections of the respective gas insulated conductor assemblies. In Fig. 12, three flanges 908a, 908b, 908c are shown. The three flanges may be connected to flanges of an abutting housing section with a clamp device 914 having a first clamp member 915a and a second clamp member 915b which may be connected at one end with a hinge 917 and at a second end with a screw 920. The first and second clamp members are formed, such that each clamp member 915a, 915b cooperates with the first and the second flanges 908a, 908b, 908c of the three parallel housing sections, such that, when the clamp members are tightened in a circumferential direction of the clamp members, for example by screw 920, the first and second flanges of each gas insulated conductor assembly are pressed towards each other.

The written description uses examples to disclose the invention, including the best mode, and also to enable any person skilled in the art to make and use the invention. While the invention has been described in terms of various specific embodiments, those skilled in the art will recognize that the invention may be practisized with modifications within the spirit and scope of the claims. Especially, mutually non-exclusive features of the embodiments described above may be combined with each other. The patentable scope of the invention is defined by the claims, and may include other examples that secure to those skilled in the art. Such other examples are intended to be within the scope of the claims.

## Claims

1. Gas insulated conductor assembly (1) comprising a housing (10) for holding an insulating gas therein, the housing having a first housing section (12a, 12b, 12c, 12d, 12e, 102, 202, 302, 402, 502) and a second housing section (12a, 12b, 12c, 12d, 12e, 104, 204, 304, 404, 504), wherein
the first housing section has a first flange (18a, 18b, 18c, 18d, 106, 206, 306, 406, 506) arranged at an end thereof, and the second housing section has a second flange (20b, 20c, 20d, 20e, 108, 208, 308, 408, 508, 608, 708, 908a, 908b, 908c) arranged at an end thereof, each of the first flange and the second flange having a respective contact surface (106a, 206a, 306a, 406a, 506a, 108a, 208a, 308a, 408a, 508a) and a respective clamping surface (106b, 206b, 306b, 406b, 506b, 108b, 208b, 308b, 408b, 508b) opposite to the contact surface, wherein the contact surfaces of the first flange and of the second flange are facing each other, the end of the first housing section defining a first housing axis (X) and the end of the second housing section defining a second housing axis (X) and the ends of the first and second housing section defining a radial plane (P) perpendicular to the housing axis, the gas insulated conductor assembly further comprising
a clamp device (112, 614, 714, 914) clamping the first flange and the second flange against each other and having at least one clamp member (114, 116, 214, 216, 314, 414, 514, 615a, 615b, 615c, 715a, 715b, 814, 915a, 915b), wherein the at least one clamp member has a first jaw surface (115a, 215a, 315a, 415a, 515a) and a second jaw surface (115b, 215b, 315b, 415b, 515b), wherein the first jaw surface cooperates with the clamping surface of the first flange and the second jaw surface cooperates with the clamping surface of the second flange, wherein
at least one of the first clamping surface, the second clamping surface, the first jaw surface and the second jaw surface has an oblique surface portion with respect to the radial plane such that the first flange and the second flange are pressed towards each other.

2. Gas insulated conductor assembly according to claim 1, wherein
the end of the first housing section is centred with respect to the end of the second housing by the clamp device, such that the first housing axis (X) is aligned to the second housing axis (X).

3. Gas insulated conductor assembly according to claim 1, wherein
the first housing axis has an offset to the second housing axis.

4. Gas insulated conductor assembly according to one of the preceding claims, wherein the gas insulated conductor assembly comprises at least one internal conductor (14a, 14b, 14c, 14d, 14e) arranged inside the first and/or the second housing sections (12a, 12b, 12c, 12d, 12e, 102, 202, 302, 402, 502, 104, 204, 304, 404, 504), wherein in particular the at least one internal conductor is one, two or three internal conductors, and wherein in particular at least a portion of the at least one internal conductor extends parallel to the respective housing axis (X).

5. Gas insulated conductor assembly according to any one of the preceding claims,
wherein the clamp device (112, 614, 714, 914) is arranged as a ring around the housing in a circumferential direction, and wherein the clamp device comprises an opening element for opening the ring.

6. Gas insulated conductor assembly according to any one of the preceding claims,
wherein the clamp device comprises a tensioning mechanism (122, 222a, 222b, 622, 624, 722, 724, 726, 920) for tensioning the clamp device in a circumferential direction.

7. Gas insulated conductor assembly according to claim 6, wherein
the tensioning mechanism is a bolt and nut system, having a bolt-and-nut axis in a circumferential direction.

8. Gas insulated conductor assembly according to claim 6, wherein
the tensioning mechanism comprises a buckle (722, 724, 726).

9. Gas insulated conductor assembly according to one of the preceding claims, wherein the clamp device (112, 614, 714, 914) comprises a plurality of clamp members (114, 116, 214, 216, 314, 414, 514, 615a, 615b, 615c, 715a, 715b, 814, 915a, 915b).

10. Gas insulated conductor assembly according to claim 9, wherein the clamp members are arranged in a chain with neighbouring clamp members being interconnected by respective hinges (717, 917).

11. Gas insulated conductor assembly according to any one of the preceding claims,
wherein the at least one clamp member (114, 116, 314, 414, 514, 615a, 615b, 615c, 715a, 715b, 814) is shaped as a circular ring segment.

12. Gas insulated conductor assembly according to any one of claims 1 to 6, wherein the at least one clamp member (214, 216) of the clamp device is shaped as a substantially straight bar.

13. Gas insulated conductor assembly according to claim 12, wherein
the clamp device further comprises a tensioning mechanism for pressing the at least one clamp member against a side of the flange, the tensioning system being in particular a bolt and nut system.

14. Gas insulated switchgear assembly (1) comprising at least one gas insulated conductor assembly according to one of the preceding claims.

15. Method of assembling a housing of a gas insulated conductor assembly, the housing comprising a first housing section (12a, 12b, 12c, 12d, 12e, 102, 202, 302, 402, 502) and a second housing section (12a, 12b, 12c, 12d, 12e, 104, 204, 304, 404, 504), the first housing section having a first flange (18a, 18b, 18c, 18d, 106, 206, 306, 406, 506) arranged at an end of the first housing section, and the second housing section having a second flange (20b, 20c, 20d, 20e, 108, 208, 308, 408, 508, 608, 708, 908a, 908b, 908c)arranged at an end of the second housing section, each of the first flange and the second flange having a respective contact surface (106a, 206a, 306a, 406a, 506a, 108a, 208a, 308a, 408a, 508a) and a respective clamping surface (106b, 206b, 306b, 406b, 506b, 108b, 208b, 308b, 408b, 508b) opposite to the contact surface, wherein the contact surfaces of the first flange and of the second flange are facing each other, the method comprising
- placing a clamp device (112, 614, 714, 914) having at least one clamp member (114, 116, 214, 216, 314, 414, 514, 615a, 615b, 615c, 715a, 715b, 814, 915a, 915b) circumferentially around the first flange and the second flange, such that a first jaw surface (115a, 215a, 315a, 415a, 515a) of the at least one clamp member cooperates with the clamping surface of the first flange, and that a second jaw surface (115b, 215b, 315b, 415b, 515b) of the at least one clamp member cooperates with the clamping surface of the second flange, wherein at least one of the first clamping surface, the second clamping surface, the first jaw surface and the second jaw surface has an oblique surface portion with respect to a radial plane defined by the end of the first housing section and the end of the second housing section; and
- tightening the clamp device in a circumferential direction such that the first flange and the second flange are pressed towards each other.
